(19) Europäisches Patentamt
European Patent Office
Office européen des brevets

(11) **EP 3 479 929 A1**

(12) **EUROPÄISCHE PATENTANMELDUNG**

(43) Veröffentlichungstag:
**08.05.2019 Patentblatt 2019/19**

(51) Int Cl.:
***B22F 1/00*** *(2006.01)*  ***B22F 3/105*** *(2006.01)*
***B33Y 70/00*** *(2015.01)*  ***B29C 64/165*** *(2017.01)*

(21) Anmeldenummer: **17200345.1**

(22) Anmeldetag: **07.11.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Heraeus Additive Manufacturing GmbH**
**63450 Hanau (DE)**

(72) Erfinder: **Bauereiß, Andreas**
**63452 Hanau (DE)**

(74) Vertreter: **Heraeus IP**
**Heraeus Holding GmbH**
**Schutzrechte**
**Heraeusstraße 12-14**
**63450 Hanau (DE)**

(54) **VERWENDUNG EINER WÄSSRIGEN ZUSAMMENSETZUNG FÜR DIE ADDITIVE FERTIGUNG EINES METALLISCHEN FORMKÖRPERS**

(57) Die vorliegende Erfindung betrifft die Verwendung einer wässrigen Zusammensetzung, die ein Pulver eines Metalls enthält, wobei das Metall Kupfer, Gold, Silber oder Aluminium oder eine Legierung oder intermetallische Phase eines dieser Metalle ist, für die additive Fertigung eines metallischen Formkörpers durch Laserstrahlschmelzen oder-sintern.

EP 3 479 929 A1

**Beschreibung**

Additive Fertigungsverfahren arbeiten werkzeuglos und ohne Form. Das Volumen eines Objekts wird dabei schichtweise gemäß einem digitalen Computermodell aufgebaut.

Auch metallische Formkörper lassen sich über eine additive Fertigung herstellen. Beispielsweise erfolgt die additive Fertigung über ein Strahlschmelzen oder Strahlsintern eines Metallpulvers (Pulverbett-basierte Verfahren). Als Strahlquellen werden Laser- oder Elektronenstrahlen verwendet (selektives Laserstrahlschmelzen oder -sintern, selektives Elektronenstrahlschmelzen oder -sintern).

Beim selektiven Laserschmelzen wird der zu verarbeitende Werkstoff in Pulverform in einer dünnen Schicht auf der Bauplatte oder einer bereits zuvor abgeschiedenen Werkstoffschicht aufgebracht. Der pulverförmige Werkstoff wird mittels Laserstrahlung lokal vollständig geschmolzen und bildet nach der Erstarrung eine feste Materialschicht. Anschließend wird die Grundplatte um den Betrag einer Schichtdicke abgesenkt und erneut Pulver aufgetragen. Dieser Zyklus wird solange wiederholt, bis der fertige Formkörper erhalten wird. Beim selektiven Elektronenstrahlschmelzen erfolgt das lokale Aufschmelzen des Pulvers durch einen Elektronenstrahl.

WO 98/24574 A1 beschreibt ein Verfahren zur Herstellung eines Formkörpers durch ein selektives Lasersintern bzw. Laserschmelzen, wobei ein metallisches Werkstoffpulver aufgebracht und durch den Laserstrahl aufgeschmolzen wird, der Laserstrahl in mehreren Spuren über den vorgegebenen Bereich der Werkstoffpulverschicht so geführt wird, dass jede folgende Spur des Laserstrahls die vorherige Spur teilweise überlappt und eine Schutzgasatmosphäre über der Wechselwirkungszone von Laserstrahl mit dem metallischen Werkstoffpulver aufrechterhalten wird.

Den aktuellen Stand der additiven Fertigung von metallischen Formkörpern, z.B. durch Laserstrahl- und Elektronenstrahlschmelzen von schichtweise aufgetragenem Metallpulver, beschreiben beispielsweise D. Herzog et al., Acta Materialia, 117 (2016), S. 371-392. M. Markl et al., Schweißen und Schneiden, 69 (2017), Heft 1-2, S. 30-39 beschreiben die additive Fertigung durch selektives Elektronenstrahlschmelzen.

Die Pulverbett-basierten Verfahren unter Verwendung von Metallpulvern weisen gewisse Nachteile auf.

Da Metallpulver aufgrund ihrer hohen Oberfläche sehr reaktiv sein können, stellen sie erhöhte Anforderungen an ihre sichere Handhabung.

WO 2017/037165 A1 beschreibt ein additives Fertigungsverfahren durch ein selektives Laserschmelzen oder -sintern, wobei der zu schmelzende bzw. zu versinternde Pulverwerkstoff schichtweise in Form einer Suspension aufgetragen wird. Als geeignete metallische Werkstoffe für dieses Verfahren werden Titan und Wolfram erwähnt.

Metalle mit hoher elektrischer Leitfähigkeit, insbesondere Kupfer, Gold, Silber und Aluminium, stellen interessante Werkstoffe dar. Wegen ihrer starken Reflektion im infraroten Wellenlängenbereich stellt die Bearbeitung dieser Werkstoffe durch einen Laserstrahl eine große Herausforderung dar, da die meisten derzeit verfügbaren kontinuierlich strahlenden Hochleistungslaser (cw-Laser) genau in diesem Wellenlängenbereich arbeiten. Diese Problematik wird beispielsweise von M. Naeem, Laser Technik Journal, Volume 10, Januar 2013, S. 18-20, und in US 2015/0102016 A1 beschrieben. Um die Absorption der Laserstrahlung durch stark reflektierende Metalle zu verbessern, können Laser verwendet werden, die eine niedrigere Wellenlänge aufweisen (z.B. "grüne" Laser). Diese Laser weisen aber derzeit noch keine ausreichende Leistung und Stabilität auf.

Beim Aufschmelzen des Metallpulvers durch den Laserstrahl in dem vordefinierten Bereich einer Schicht sollte das geschmolzene Metall einen einheitlichen Schmelzfilm bilden, der diesen Bereich möglichst vollständig benetzt. Hinsichtlich der Prozessflexibilität wäre vorteilhaft, wenn dieser einheitliche Schmelzfilm auch bei unterschiedlichen Scan-Geschwindigkeiten des Laserstrahls erhalten wird. In der Praxis beobachtet man jedoch häufig die Ausbildung isolierter Schmelztröpfchen, die den mit dem Laserstrahl behandelten Bereich nicht ausreichend benetzen.

Eine Aufgabe der vorliegenden Erfindung ist die Bereitstellung eines additiven Fertigungsverfahrens durch ein Laserstrahlschmelzen bzw. -sintern, das auch für Metalle mit geringer Laserstrahlabsorption geeignet ist und ein verbessertes Aufschmelzverhalten (z.B. Ausbildung eines einheitlichen Schmelzfilms anstelle isolierter Schmelztröpfchen) ermöglicht.

Gelöst wird die Aufgabe durch die Verwendung einer wässrigen, ein Metallpulver enthaltenden Zusammensetzung, wobei das Metall Kupfer, Gold, Silber oder Aluminium oder eine Legierung oder intermetallische Phase eines dieser Metalle ist, für die additive Fertigung eines metallischen Formkörpers durch Laserstrahlschmelzen oder -sintern.

Wie oben bereits erwähnt, haben diese Metalle (d.h. Kupfer, Gold, Silber, Aluminium oder eine Legierung oder intermetallische Phase eines dieser Metalle) als gemeinsame Eigenschaft, dass sie im Infrarotbereich, insbesondere auch im Nah-IR-Bereich, eine sehr geringe Absorption bzw. einen hohen Reflexionsgrad aufweisen und daher eher ungeeignet sind für eine Laserbehandlung, beispielsweise im Rahmen eines selektiven Laserschmelzverfahrens. In der vorliegenden Erfindung wurde jedoch überraschend erkannt, dass diese Metalle ein deutlich verbessertes Aufschmelzverhalten (d.h. Ausbildung eines einheitlichen Schmelzfilms anstelle isolierter Schmelztröpfchen) zeigen, wenn das Metallpulver nicht in trockener Form, sondern zusammen mit Wasser (d.h. in Form einer wässrigen Zusammensetzung) für den Laserschmelz- oder Lasersinterprozess verwendet wird.

Durch den Begriff "wässrige Zusammensetzung" wird zum Ausdruck gebracht, dass die Zusammensetzung Wasser enthält. Der Wassergehalt und damit auch die Konsistenz der wässrigen Zusammensetzung kann über einen breiten Bereich variiert werden. Bei relativ hohem Wassergehalt liegt die wässrige Zusammensetzung als Suspension mit sehr hoher Fließfähigkeit vor, während die Zusammensetzung bei relativ niedrigem Wassergehalt eher eine klumpige oder pastenförmige Konsistenz aufweist. Beispielsweise enthält die wässrige Zusammensetzung Wasser in einer Menge von 1 Vol% bis 80 Vol%, bevorzugter 3 Vol% bis 75 Vol% oder 5 Vol% bis 70 Vol%.

Wie nachfolgend noch eingehender beschrieben wird, kann die wässrige Zusammensetzung bereits beim Einbringen in den Bauraum der Strahlschmelzvorrichtung oder beim schichtförmigen Aufbringen auf das Substrat Wasser enthalten. Alternativ ist es auch möglich, zunächst ein trockenes Metallpulver schichtförmig auf das Substrat im Bauraum (d.h. die Bauplatte oder eine bereits zuvor aufgetragene Metallschicht) aufzubringen und dieser trockenen Metallpulverschicht dann Wasser in der gewünschten Menge zuzuführen. Gemäß einer weiteren Alternative ist es auch möglich, eine wässrige Zusammensetzung, die einen relativ hohen Wassergehalt aufweist, schichtförmig auf das Substrat im Bauraum aufzubringen und anschließend durch eine geeignete Maßnahme den Wassergehalt der Schicht zu reduzieren, bevor das selektive Aufschmelzen oder Sintern durch die Strahlquelle stattfindet.

Unter dem Begriff "Legierung eines Metalls" wird eine Legierung verstanden, die dieses Metall als Hauptkomponente (z.B. in einem Anteil von mehr 50 at%, bevorzugter mehr als 65 at% oder sogar mehr als 75 at%) und daneben ein oder mehrere Legierungselemente enthält. Weiterhin kann die Legierung beispielsweise zwei oder mehrere der oben genannten Metalle in einer Gesamtmenge von mindestens 65 at%, bevorzugter mindestens 75 at% oder sogar mindestens 85 at% enthalten.

Geeignete Partikelgrößen eines Metallpulvers im Rahmen eines additiven Fertigungsverfahrens sind dem Fachmann bekannt oder können gegebenenfalls durch Routineversuche bestimmt werden. Beispielsweise weist das Metall-pulver einen massebezogenen $d_{50}$-Wert im Bereich von 10 $\mu$m bis 200 $\mu$m auf. Die Bestimmung des $d_{50}$-Werts erfolgt beispielsweise durch Laserbeugung.

Geeignete Metallpulver sind kommerziell erhältlich oder lassen sich über Verfahren, die dem Fachmann bekannt sind, herstellen.

Optional kann die wässrige Zusammensetzung neben dem Wasser und dem Metallpulver noch ein oder mehrere Additive enthalten. Beispielsweise enthält die wässrige Zusammensetzung ein Feuchthaltemittel und/oder ein Flussmittel. Im Rahmen der vorliegenden Erfindung wurde überraschend erkannt, dass die Anwesenheit eines Feuchthaltemittels und/oder eines Flussmittels in der wässrigen Zusammensetzung zu einer weiteren Verbesserung des Aufschmelzverhaltens des Metallpulvers führen kann.

Feuchthaltemittel sind dem Fachmann bekannt, beispielsweise aus dem Bereich der kosmetischen Zubereitungen. Bevorzugt ist das Feuchthaltemittel ein Polyol bzw. eine Polyhydroxyverbindung (d.h. eine Verbindung, die mindestens zwei Hydroxy-Gruppen aufweist), eine Mono- oder Polyalkoxyverbindung (d.h. eine Verbindung, die eine oder mehrere Alkoxy-Gruppen aufweist) oder eine Aminosäure oder ein Gemisch aus mindestens zwei dieser Verbindungen.

Beispielsweise ist die Polyhydroxyverbindung Glycerin, ein Glycol (z.B. Ethylenglycol, Propylenglycol, Butylenglycol), ein Zuckeralkohol (z.B. Sorbitol, Mannitol, Glucitol, Isomalt, Lactit, Xylit, Threit, Erythrit oder Arabit), ein Polyalkylenglycol (z.B. Diethylenglycol, Dipropylenglycol, ein Polyalkylenglycol mit einem zahlengemittelten Molekular-gewicht von $\leq$ 5000 g/mol, bevorzugter $\leq$ 2000 g/mol, noch bevorzugter $\leq$ 500 g/mol), ein Oligo- oder Polysaccharid oder ein Gemisch aus mindestens zwei dieser Verbindungen.

Das Polyalkylenglycol ist beispielsweise ein Polyethylenglycol oder ein Polypropylenglycol. Bevorzugt weist das Polyalkylenglycol ein zahlengemitteltes Molekulargewicht von $\leq$ 5000 g/mol, bevorzugter $\leq$ 2000 g/mol, noch be-vorzugter $\leq$ 500 g/mol auf.

Die Bestimmung des zahlengemittelten Molekulargewichts kann beispielsweise durch nasschemische OH-Zahlbestimmung nach DIN 53 240 oder entsprechend der in der US 2010/0240864 A1 beschriebenen Methode erfolgen.

Das Oligo- oder Polysaccharid ist beispielsweise ein Galaktose-haltiges Polysaccharid (z.B. Agarose, Agar).

Die Mono- oder Polyalkoxy-Verbindung kann beispielsweise eine Monohydroxy-Verbindung oder auch eine OH-freie Verbindung sein. Die Polyalkoxy-Verbindung enthält bevorzugt eine oder mehrere Ethoxy- und/oder Propoxy-Gruppen. Die Alkoxy-Gruppen können beispielsweise als terminale Gruppen vorliegen. Zwei oder mehr Alkoxy-Gruppen können unmittelbar aufeinander folgend in der Verbindung vorliegen. Die Mono- oder Polyalkoxy-Verbindung wird beispielsweise erhalten, indem eine oder mehrere Hydroxy-Gruppen in einer der oben genannten PolyhydroxyVerbindungen alkoxyliert (z.B. ethoxyliert und/oder propoxyliert) werden, so dass eine alkoxylierte Mono-Hydroxy-Verbindung oder eine alkoxylierte Hydroxy-freie Verbindung vorliegt.

Bezogen auf das Wasser der wässrigen Zusammensetzung liegt das Feuchthaltemittel beispielsweise in einem Anteil von 0,1 bis 60 Vol%, bevorzugter 0,5-50 Vol% vor. Das Volumen des zugegebenen Feuchthaltemittels kann unmittelbar gemessen oder über die Beziehung $V_{Feuchthaltemittel} = m_{Feuchthaltemittel} / \rho_{Feuchthaltemittel}$ (wobei m die Masse und $\rho$ die Dichte des Feuchthaltemittels sind) bestimmt werden.

Bevorzugt ist das Feuchthaltemittel wasserlöslich. Beispielsweise weist das Feuchthaltemittel bei 25°C eine Löslichkeit in Wasser von mindestens 1 g/l, bevorzugter mindestens 5 g/l, noch bevorzugter mindestens 7 g/l oder sogar mindestens 10 g/l auf.

Wie dem Fachmann bekannt ist, werden Flussmittel üblicherweise beim Löten von Metallen eingesetzt. Geeignete Flussmittel sind beispielsweise solche, die in der DIN EN 1045:1997 als Flussmittel zum Hartlöten genannt werden. Beispielsweise ist das Flussmittel eine Bor-haltige Verbindung, ein Phosphat, ein Silikat, ein borfreies Chlorid oder Fluorid (z.B. ein Alkalimetall-, Erdalkalimetall- oder Ammoniumfluorid oder -chlorid).

Als Bor-haltige Verbindung können beispielsweise Borsäure, Boroxide (z.B. $B_2O_3$), Borate (z.B. Alkalimetall-, Erdalkalimetall- oder Ammoniumborate) oder Fluoroborate (z.B. Alkalimetall-, Erdalkalimetall- oder Ammoniumfluoroborate) genannt werden. Das Borat ist beispielsweise ein Metaborat oder ein Tetraborat.

Bezogen auf das Wasser der wässrigen Zusammensetzung liegt das Flussmittel beispielsweise in einem Anteil von 0,1 bis 50 Vol%, bevorzugter 1 bis 30 Vol% vor. Das Volumen des zugegebenen Flussmittels kann unmittelbar gemessen oder über die Beziehung $V_{Flussmittel} = m_{Flussmittel} / \rho_{Flussmittel}$ (wobei m die Masse und $\rho$ die Dichte des Flussmittels sind) bestimmt werden. Sofern die wässrige Zusammensetzung auch ein Feuchthaltemittel enthält, liegt das Flussmittel beispielsweise in einem Anteil von 0,5 bis 50 Vol%, bezogen auf die Summe der Volumia des Wasser und des Feuchthaltemittels (d.h. $V_{H2O} + V_{Feuchthaltemittel}$), vor.

Laser, die für die additive Fertigung durch Laserstrahlschmelzen oder -sintern verwendet werden können, sind dem Fachmann bekannt. Durch die Verwendung der oben beschriebenen wässrigen Zusammensetzung zeigt das Metallpulver auch gegenüber einem Laserstrahl mit einer Wellenlänge im IR-Bereich ein vorteilhaftes Aufschmelzverhalten. In einer bevorzugten Ausführungsform wird daher ein IR-Laser, also ein Laserstrahl mit einer Wellenlänge im Infrarotbereich (z.B. 750 nm bis 30 $\mu$m), für die additive Fertigung des metallischen Formkörpers verwendet. Alternativ können aber im Rahmen der vorliegenden Erfindung auch Laserstrahlen mit einer niedrigeren Wellenlänge, beispielsweise im Bereich des sichtbaren Lichts (z.B. 400-700 nm), verwendet werden.

Die vorliegende Erfindung betrifft außerdem ein Verfahren zur additiven Fertigung eines metallischen Formkörpers durch ein Laserstrahlschmelzen oder Laserstrahlsintern, umfassend

(i) Bereitstellen der oben beschriebenen wässrigen Zusammensetzung in Form einer Schicht S1 auf einem Substrat,
(ii) selektives Aufschmelzen oder Sintern des Metallpulvers in der Schicht S1 durch einen Laserstrahl,
(iii) nach dem Erstarren des aufgeschmolzenen oder gesinterten Metallpulvers Bereitstellen der oben beschriebenen wässrigen Zusammensetzung in Form einer weiteren Schicht S2 auf der zuvor bereitgestellten Schicht S1,
(iv) selektives Aufschmelzen oder Sintern des Metallpulvers in der weiteren Schicht S2 durch den Laserstrahl.

Bei dem Substrat kann es sich um die noch unbeschichtete Bauplatte im Bauraum der Vorrichtung oder alternativ um zuvor bereits auf der Bauplatte abgeschiedene Materialschichten des herzustellenden Formkörpers handeln.

Das Bereitstellen der wässrigen Zusammensetzung in Form einer Schicht auf dem Substrat kann beispielsweise erfolgen, indem die wässrige Zusammensetzung unter Verwendung üblicher, dem Fachmann bekannter Hilfsmittel auf dem Substrat aufgebracht wird. Das schichtförmige Aufbringen der wässrigen Zusammensetzung erfolgt beispielsweise durch ein Rakel, eine Walze, eine Presse oder durch Siebdruck oder eine Kombination aus mindestens zwei dieser Methoden.

Nach dem Aufbringen der wässrigen Zusammensetzung kann ohne weitere Zwischenschritte der Schritt (ii) erfolgen.

Alternativ ist es auch möglich, dass nach dem Aufbringen auf das Substrat der Wassergehalt der wässrigen Zusammensetzung durch eine geeignete Maßnahme (z.B. durch Behandlung mit der Strahlquelle, so dass ein Teil des Wassers verdampft, wobei ein Aufschmelzen oder Sintern des Metallpulvers jedoch bevorzugt noch nicht stattfindet) reduziert wird, bevor der Schritt (ii) erfolgt.

Im Rahmen der vorliegenden Erfindung kann das Bereitstellen der wässrigen Zusammensetzung in Form einer Schicht auf dem Substrat beispielsweise auch dadurch erfolgen, dass zunächst ein trockenes Metallpulver auf dem Substrat schichtförmig aufgebracht wird und das Wasser anschließend dieser trockenen Pulverschicht zugeführt wird. Dies kann beispielsweise durch eine Befeuchtungseinheit (z.B. in Form einer oder mehrerer Düsen) erfolgen, die das Pulver benebelt oder besprüht. Das dem trockenen Metallpulver zugegebene Wasser kann optional ein Additiv, z.B. ein Feuchthaltemittel und/oder ein Flussmittel, enthalten. Das Aufbringen der trockenen Pulverschicht kann mit den gleichen Mitteln wie das Aufbringen der wässrigen Zusammensetzung erfolgen, also z.B. einem Rakel, einer Walze oder einer Presse.

Ein Metallpulver besteht allgemein aus Metallpulverpartikeln, zwischen denen interpartikuläre Hohlräume vorliegen. Bei einem trockenen Pulver sind diese interpartikulären Hohlräume vollständig mit einem Gas gefüllt. Handelt es sich um ein nasses oder feuchtes Pulver, können die interpartikulären Hohlräume teilweise oder sogar vollständig mit der anwesenden Flüssigkeit gefüllt sein.

In der in Schritt (i) bereitgestellten Schicht S1 der wässrigen Zusammensetzung können die zwischen den Metallpulverpartikeln vorliegenden Hohlräume vollständig mit Wasser und optionalen Additiven (wie z.B. dem Flussmittel und/oder dem Feuchthaltemittel) ausgefüllt sein. In einer bevorzugten Ausführungsform sind die zwischen den Metallpulverpartikeln vorliegenden Hohlräume jedoch zu Beginn des Schritts (ii) teilweise mit einem Gas gefüllt. Dabei handelt es sich beispielsweise um das inerte Schutzgas (z.B. Stickstoff oder ein Edelgas), in dessen Anwesenheit das additive Fertigungsverfahren durchgeführt wird. Wenn in der Schicht S1 die zwischen den Metallpulverpartikeln vorliegenden Hohlräume zu Beginn des Schritts (ii) teilweise mit einem Gas (z.B. dem Schutzgas des additiven Fertigungsverfahrens) gefüllt sind, kann eine weitere Verbesserung des Aufschmelzverhaltens des Metallpulvers erzielt werden.

Durch die relativen Volumenanteile des Wassers und optionaler Additive (wie z.B. dem Flussmittel und/oder dem Feuchthaltemittel) lässt sich steuern, ob die zwischen den Metallpulverpartikeln vorliegenden Hohlräume vollständig durch diese Komponenten ausgefüllt sind oder noch ein Restvolumen in diesen interpartikulären Hohlräumen verbleibt, das mit einem Gas (z.B. dem inerten Schutzgas) ausgefüllt werden kann.

Das Gesamtvolumen der auf dem Substrat bereitgestellten Schicht S1 (d.h. $V_{schicht\ S1}$) ergibt sich aus der Summe der Volumen der Einzelkomponenten, d.h.

- dem Volumen des Wassers $V_{H2O}$,
- dem Volumen des Metallpulvers $V_{Metall}$,
- sofern anwesend, dem Volumen einer oder mehrerer Additive $V_{Additiv}$,
- sofern anwesend, dem Volumen des Gases $V_{Gas}$.

Das Volumen einer zugegebenen Komponente lässt sich messen oder gegebenenfalls über die Beziehung $V = m / \rho$ bestimmen, wobei $m$ die Masse und $\rho$ die Dichte der jeweiligen Komponente ist.

Das Volumen der auf dem Substrat bereitgestellten Schicht S1 lässt sich also durch folgende Beziehung ausdrücken:

$$V_{Schicht\,S1} = \frac{m_{H_2O}}{\rho_{H_2O}} + \frac{m_{Additiv}}{\rho_{Additiv}} + V_{Gas} + \frac{m_{Metall}}{\rho_{Metall}}$$

In einer bevorzugten Ausführungsform ist daher zu Beginn des Schritts (ii) $V_{Gas} > 0$ (d.h. die zwischen den Metallpulverpartikeln vorliegenden interpartikulären Hohlräume sind zu Beginn des Schritts (ii) teilweise mit einem Gas gefüllt).

Beispielsweise genügt die auf dem Substrat bereitgestellte Schicht S1 zu Beginn des Schritts (ii) der folgenden Bedingung:

$$V_{Gas} / V_{Schicht\,S1} > 0{,}04.$$

Noch bevorzugter ist $V_{Gas} / V_{Schicht\,S1} > 0{,}06$ oder sogar $> 0{,}08$.
In einer bevorzugten Ausführungsform gilt:

$$0{,}40 > V_{Gas} / V_{Schicht\,S1} > 0{,}04$$

Noch bevorzugter gilt:

$$0{,}35 > V_{Gas} / V_{Schicht\,S1} > 0{,}06$$

oder

$$0{,}30 > V_{Gas} / V_{Schicht\,S1} > 0{,}08.$$

Weiterhin kann es bevorzugt sein, wenn die auf dem Substrat bereitgestellte Schicht S1 zu Beginn des Schritts (ii) der folgenden Bedingung genügt:

$$0{,}001 \leq R \leq 0{,}50$$

wobei

$$R = (V_{H2O} + V_{Additiv}) / V_{Schicht\,S1}$$

Aufgrund der Beziehung V = m / ρ (wobei m die Masse und ρ die Dichte der jeweiligen Komponente sind), lässt sich der Parameter R auch durch folgende Beziehung wiedergeben:

$$R = \frac{\frac{m_{H_2O}}{\rho_{H_2O}} + \frac{m_{Additiv}}{\rho_{Additiv}}}{V_{Schicht\,S1}}$$

Bevorzugter gilt:

$$0,01 \le R \le 0,45;$$

noch bevorzugter gilt:

$$0,05 \le R \le 0,40.$$

In Schritt (ii) erfolgt das selektive Aufschmelzen oder Sintern des Metallpulvers in der durch die wässrige Zusammensetzung gebildeten Schicht S1 durch den Laserstrahl. Ob ein Aufschmelzen oder ein Sintern des Metallpulvers erfolgt, lässt sich beispielsweise durch die Strahlungsintensität steuern. Mit dem Begriff "selektiv" wird bekanntermaßen zum Ausdruck gebracht, dass im Rahmen der additiven Fertigung eines Formkörpers das Aufschmelzen oder Sintern des Metallpulvers auf Basis digitaler 3D-Daten des Formkörpers nur in definierten, vorgegebenen Bereichen der Schicht stattfindet.

Nach dem Erstarren des aufgeschmolzenen oder gesinterten Metallpulvers erfolgt in Schritt (iii) das Bereitstellen der oben beschriebenen wässrigen Zusammensetzung in Form einer weiteren Schicht S2 auf der zuvor bereitgestellten Schicht S1.

Die Bereitstellung der weiteren Schicht S2 kann auf die gleiche Weise erfolgen wie die Bereitstellung der Schicht S1. Hinsichtlich der bevorzugten Eigenschaften der die Schicht S2 bildenden wässrigen Zusammensetzung kann auf die obigen Ausführungen verwiesen werden.

Das für die Bereitstellung der Schicht S2 verwendete Metall kann mit dem für die Bereitstellung der Schicht S1 verwendeten Metall übereinstimmen. Alternativ ist es jedoch möglich, für die Schicht S2 ein Pulver eines anderen Metalls zu verwenden.

Zwischen Schritt (ii) und Schritt (iii) wird die Bauplatte bevorzugt um einen Betrag abgesenkt, der im Wesentlichen der Schichtdicke der Schicht S1 entspricht. Diese Vorgehensweise im Rahmen der additiven Fertigung eines Formkörpers ist dem Fachmann allgemein bekannt.

Hinsichtlich des selektiven Aufschmelzens oder Sinterns des Metallpulvers in der durch die wässrige Zusammensetzung gebildeten Schicht S2 durch eine Strahlquelle in Schritt (iv) kann auf die obigen Ausführungen zu Schritt (ii) verwiesen werden.

Bevorzugt werden die Schritte (i)-(iv) in Anwesenheit eines inerten Schutzgases wie Stickstoff oder einem Edelgas durchgeführt. Durch das inerte Schutzgas wird im Bauraum der Strahlschmelz- bzw. Strahlsintervorrichtung eine Schutzgasatmosphäre ausgebildet, die eine unerwünsche Oxidation des Metalls verhindert.

Die Schritte (iii) und (iv) werden bevorzugt ein- oder mehrmals wiederholt, z.B. bis zur Fertigstellung des metallischen Formkörpers wiederholt.

Die vorliegende Erfindung wird anhand der nachfolgenden Beispiele eingehender beschrieben.

**Beispiele**

In den folgenden Beispielen und Vergleichsbeispielen wurde für das selektive Laserschmelzen folgendes Gerät verwendet: Concept Laser Mlab Cusing. Laser: Nd:YAG-Laser, Wellenlänge: 1,064 μm.

Beispiel 1

Es wurde Wasser zu einem Kupferpulver zugegeben. Die dabei erhaltene wässrige Zusammensetzung enthielt Wasser in einem Anteil von 60 Vol%.

Die wässrige Zusammensetzung wurde in dem Bauraum des Geräts in Form einer dünnen Schicht (Schichtdicke von etwa 200-400 $\mu$m) unter Verwendung einer Platte auf die Bauplatte aufgepresst. Das Aufschmelzen des Metallpulvers in definierten Bereichen der aufgebrachten Schicht erfolgte bei Raumtemperatur. Als inertes Schutzgas im Bauraum wurde Argon verwendet. Bis zur Etablierung einer stabilen Schutzgasströmung dauerte es etwa 10 Minuten. Anschließend wurde der Laserschmelzschritt gestartet. Der Laserstrahl bewegte sich mit einer Geschwindigkeit von 500 mm/s bei einer Strahlleistung von 95 W und einem Abstand benachbarter Linien von 10 $\mu$m über eine vordefinierte Fläche von 2 x 2 mm$^2$ der aufgebrachten Schicht der wässrigen Zusammensetzung.

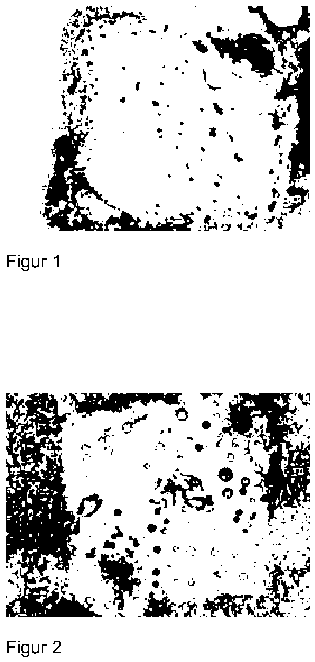

Von der vom Laserstrahl erfassten Fläche wurde eine mikroskopische Aufnahme gemacht. Diese Aufnahme wird in Figur 1 gezeigt.

Vergleichsbeispiel 1

In Vergleichsbeispiel 1 wurde ein trockenes Kupferpulver verwendet. Das Kupferpulver entsprach dem in Beispiel 1 verwendeten Kupferpulver.

Das trockene Kupferpulver wurde in dem Bauraum des Geräts in Form einer dünnen Schicht (Schichtdicke etwa 200-400 $\mu$m) auf die Bauplatte aufgebracht. Das Aufschmelzen des Metallpulvers in definierten Bereichen der aufgebrachten Schicht erfolgte bei Raumtemperatur. Als inertes Schutzgas im Bauraum wurde Argon verwendet. Bis zur Etablierung einer stabilen Schutzgasströmung dauerte es etwa 10 Minuten. Anschließend wurde der Laserschmelzschritt gestartet. Der Laserstrahl bewegte sich mit einer Geschwindigkeit von 500 mm/s bei einer Strahlleistung von 95 W und einem Abstand benachbarter Linien von 10 $\mu$m über eine vordefinierte Fläche von 2 x 2 mm$^2$ der aufgebrachten Schicht des trockenen Kupferpulvers.

Von der vom Laserstrahl erfassten Fläche wurde eine mikroskopische Aufnahme gemacht. Diese Aufnahme zeigt Figur 2.

Die Ergebnisse der oben beschriebenen Beispiele sind in der Tabelle 1 zusammengefasst.

Tabelle 1: Aufschmelzverhalten der schichtförmig auf die Bauplatte aufgebrachten Zusammensetzungen

| | Zusammensetzung | Schmelzverhalten |
|---|---|---|
| **Beispiel 1** | Cu-Pulver + Wasser | Zusammenhängender Schmelzfilm, der die vom Laserstrahl behandelte Fläche fast vollständig |
| | | benetzt |
| **Vergleichsbeispiel 1** | Trockenes Cu-Pulver | Relativ kleine und isolierte Schmelztröpfchen |

Bei der Verwendung der wässrigen Zusammensetzung anstelle des trockenen Cu-Pulvers zeigt sich eine signifikante Verbesserung des Aufschmelzverhaltens des Cu-Pulvers.

**Patentansprüche**

1. Verwendung einer wässrigen Zusammensetzung, die ein Pulver eines Metalls enthält, wobei das Metall Kupfer, Gold, Silber oder Aluminium oder eine Legierung oder intermetallische Phase eines dieser Metalle ist, für die additive Fertigung eines metallischen Formkörpers durch Laserstrahlschmelzen oder -sintern.

2. Verwendung nach Anspruch 1, wobei die wässrige Zusammensetzung Wasser in einer Menge von 1 Vol% bis 80 Vol% enthält.

3. Verwendung nach Anspruch 1 oder 2, wobei die wässrige Zusammensetzung außerdem ein Additiv, bevorzugt ein Feuchthaltemittel und/oder ein Flussmittel, enthält.

4. Ein Verfahren zur additiven Fertigung eines metallischen Formkörpers durch ein Laserstrahlschmelzen oder Laserstrahlsintern, umfassend

(i) Bereitstellen der wässrigen Zusammensetzung gemäß einem der Ansprüche 1-3 in Form einer Schicht S1 auf einem Substrat,

(ii) selektives Aufschmelzen oder Sintern des Metallpulvers in der Schicht S1 durch einen Laserstrahl,

(iii) nach dem Erstarren des aufgeschmolzenen oder gesinterten Metallpulvers Bereitstellen der wässrigen Zusammensetzung gemäß einem der Ansprüche 1-3 in Form einer weiteren Schicht S2 auf der zuvor bereitgestellten Schicht S1,

(iv) selektives Aufschmelzen oder Sintern des Metallpulvers in der weiteren Schicht S2 durch den Laserstrahl.

5. Verfahren nach Anspruch 4, wobei das Bereitstellen in Schritt (i) erfolgt, indem die wässrige Zusammensetzung auf dem Substrat aufgebracht wird und wobei nach dem Aufbringen der wässrigen Zusammensetzung auf dem Substrat ohne weitere Zwischenschritte der Schritt (ii) erfolgt.

6. Verfahren nach Anspruch 4, wobei das Bereitstellen in Schritt (i) erfolgt, indem die wässrige Zusammensetzung auf dem Substrat aufgebracht und anschließend einer Behandlung mit der Strahlquelle unterzogen wird, so dass ein Teil des Wassers verdampft, ein Aufschmelzen oder Sintern des Metallpulvers jedoch noch nicht stattfindet.

7. Verfahren nach Anspruch 4, wobei das Bereitstellen in Schritt (i) erfolgt, indem zunächst eine Schicht eines trockenen Metallpulvers auf dem Substrat aufgebracht und anschließend Wasser der trockenen Pulverschicht zugegeben wird.

8. Verfahren nach einem der Ansprüche 4-7, wobei der Laserstrahl eine Wellenlänge im Infrarotbereich aufweist.

Figur 1

Figur 2

Europäisches
Patentamt

European
Patent Office

Office européen
des brevets

# EUROPÄISCHER RECHERCHENBERICHT

**Nummer der Anmeldung**

EP 17 20 0345

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WANG XINJIAN ET AL: "Fabrication of friction-reducing texture surface by selective laser melting of ink-printed (SLM-IP) copper (Cu) nanoparticles(NPs)", APPLIED SURFACE SCIENCE, Bd. 396, 2. November 2016 (2016-11-02), Seiten 659-664, XP029855614, ISSN: 0169-4332, DOI: 10.1016/J.APSUSC.2016.11.003 * Zusammenfassung * * 1. Introduction, letzter Absatz, 2.1 SLM-IP Cu NPs * * Abbildung 1 * | 1-8 | INV. B22F1/00 B22F3/105 B33Y70/00 B29C64/165 |
| Y,D | WO 2017/037165 A1 (STICHTING ENERGIEONDERZOEK CENTRUM NEDERLAND [NL]) 9. März 2017 (2017-03-09) * Zusammenfassung * * Seite 4, Zeile 5 - Zeile 28 * * Seite 7, Zeile 12 - Zeile 21 * * Anspruch 1 * | 1-8 | |
| Y,D | M NAEEM: "laser Processing of Refkective Materials", LASER MATERIAL PROCESSING, 1. Januar 2013 (2013-01-01), Seiten 18-20, XP055467871, * Zusammenfassung * * Laser beam - material interaction, Summary * * Abbildung 1 * | 1-8 | RECHERCHIERTE SACHGEBIETE (IPC) B22F B33Y B29C |
| X | EP 3 181 271 A1 (SEIKO EPSON CORP [JP]) 21. Juni 2017 (2017-06-21) * Zusammenfassung * * Absätze [0018], [0170], [0208], [0209], [0213] * * Seiten 1-5 * | 1,3-7 | |

Der vorliegende Recherchenbericht wurde für alle Patentansprüche erstellt

| Recherchenort | Abschlußdatum der Recherche | Prüfer |
|---|---|---|
| Den Haag | 19. April 2018 | Gomes Pinto F., R |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 20 0345

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-04-2018

| Im Recherchenbericht angeführtes Patentdokument | Datum der Veröffentlichung | Mitglied(er) der Patentfamilie | Datum der Veröffentlichung |
|---|---|---|---|
| WO 2017037165 A1 | 09-03-2017 | KEINE | |
| EP 3181271 A1 | 21-06-2017 | CN 107097416 A | 29-08-2017 |
| | | EP 3181271 A1 | 21-06-2017 |
| | | JP 2017110271 A | 22-06-2017 |
| | | US 2017173688 A1 | 22-06-2017 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9824574 A1
- WO 2017037165 A1
- US 20150102016 A1
- US 20100240864 A1

**In der Beschreibung aufgeführte Nicht-Patentliteratur**

- **D. HERZOG et al.** *Acta Materialia,* 2016, vol. 117, 371-392
- **M. MARKL et al.** *Schweißen und Schneiden,* 2017, vol. 69, 30-39
- **M. NAEEM.** *Laser Technik Journal,* Januar 2013, vol. 10, 18-20